Europäisches Patentamt

European Patent Office

Office européen des brevets

(11) Numéro de publication: **0 171 316**
**B1**

(12) **FASCICULE DE BREVET EUROPÉEN**

(45) Date de publication du fascicule du brevet:
12.10.88

(21) Numéro de dépôt: **85401377.8**

(22) Date de dépôt: **08.07.85**

(51) Int. Cl.⁴: **B 01 J 12/00,** B 01 J 19/24,
C 01 B 5/00, C 01 B 7/01,
B 01 D 53/34, F 23 G 7/06,
F 23 D 14/00

(54) Procédé et dispositif pour mise en contact d'au moins deux composés gazeux réagissant notamment à haute température.

(30) Priorité: 11.07.84 FR 8411002
24.04.85 FR 8506218

(43) Date de publication de la demande:
12.02.86 Bulletin 86/7

(45) Mention de la délivrance du brevet:
12.10.88 Bulletin 88/41

(84) Etats contractants désignés:
AT BE CH DE FR GB IT LI LU NL

(56) Documents cité:
FR-A-2 366 517
FR-A-2 488 525
US-A-3 244 220
US-A-3 532 462

CHEMICAL ABSTRACTS, vol. 96, no. 24, juin 1982,
page 134, no. 201962w, Columbus, Ohio, US

Le dossier contient des informations techniques
présentées postérieurement au dépôt de la
demande et ne figurant pas dans le présent
fascicule.

(73) Titulaire: RHONE- POULENC CHIMIE, 25, quai Paul
Doumer, F-92408 Courbevoie Cédex (FR)

(72) Inventeur: Prudhon, François, 2, rue Delaunay,
F-78000 Versailles (FR)

(74) Mandataire: Dubruc, Philippe, RHONE- POULENC
INTERSERVICES Service Brevets Chimie 25, quai
Paul- Doumer, F-92408 Courbevoie Cédex (FR)

LIBER, STOCKHOLM 1988

# 0 171 316

## Description

La présente invention a pour objet un procédé et un dispositif pour conduire des réactions entre au moins deux composés gazeux, notamment à haute température et en particulier dans le cas de la synthèse directe de l'acide chlorhydrique.

On sait que, d'une manière générale, les réactions à partir d'un contact gaz-liquide posent le problème de la qualité du contact.

La demanderesse, dans le FR-A-2 257 326, a d'abord proposé de former des couples constitués chacun d'un élément de volume de liquide et d'un élément de volume de gaz selon un ensemble déterminé de trajectoires par un procédé de mise en contact de substances se présentant donc sous des phases différentes selon lequel au moins une phase gazeuse sert à former un écoulement puitstourbillon à symétrie axiale et au moins une phase liquide est introduite selon l'axe de symétrie dudit écoulement puitstourbillon, jusque dans la zone en dépression relative dudit écoulement puits-tourbillon, la quantité de mouvement des éléments de volume de l'écoulement puits-tourbillon par rapport à celle des éléments de volume de la phase axiale étant telle que ledit écoulement puits-tourbillon provoque à la fois la désintégration, la dispersion et la prise en charge de la phase axiale et son traitement éventuel par l'écoulement puits-tourbillon au sein des associations d'éléments de volumes des phases (couples gaz-liquide) ainsi formés.

L'existence momentanée de ces "couples donneur-accepteur" d'énergie et/ou de matière a été mise à profit par la demanderesse (FR-A-2 508 818) pour réaliser une distribution sélective de l'énergie fondée sur une répartition quasi-instantanée, systématique et orientée des particules par et dans la totalité du gaz moteur:
- <u>quasi instantanée</u> parce qu'elle correspond à des conditions de mélange très énergique (rapport des quantités de mouvement initiales)
- <u>systématique</u> parce qu'elle associe un élément du gaz moteur à chaque élément de fluide, initialement axial, sans omission ni répétition
- <u>orientée</u> parce qu'elle définit une origine du traitement et une trajectoire initiale communes au gaz moteur et aux éléments des autres fluides entraînés.

Les réactions qui ont lieu à haute température constituent un ensemble intéressant de l'application de ce concept.

La méthode employée par la demanderesse dans le cas d'un contact gaz-liquide permet d apporter l'énergie nécessaire à préparer le début de la réaction principale en phase gazeuse par l'intermédiaire de la phase gazeuse initiale. Le temps nécessaire à la création, la répartition systématique et la vaporisation des réactifs du liquide initial est ainsi mis à profit pour réaliser un mélange homogène du gaz initial et de la vapeur du liquide à une échelle et dans des conditions physico-chimiques telles que la réaction principale en phase homogène gazeuse puisse avoir lieu dans les meilleures conditions.

Ce temps peut être considéré comme correspondant à un effet retard dont il est possible de bénéficier dans le cas d'un contact gaz-liquide.

En revanche, dans le cas où les réactifs sont alimentés à l'état gazeux, le problème qui se pose est d'obtenir la même qualité de mélange des substances à mettre en présence que dans le cas de la mise en contact entre une phase gazeuse et une phase liquide selon le procédé décrit ci-avant, et cela avant le début de la réaction particulièrement rapide en phase gazeuse.

A ces considérations, il convient d'ajouter le fait que l'on cherche délibéremment à travailler à des températures élevées, donc dans des domaines où les vitesses de réaction sont encore plus grandes, ce qui peut se traduire par des distorsions locales redhibitoires sur les profils de concentrations, donc de températures.

L'objet de la présente invention est donc de proposer un procédé et un dispositif dont la qualité des mélanges gaz-gaz est comparable à celle obtenue avec une alimentation de type gaz-liquide décrite ci-dessus, les phases étant dans le cas de l'invention introduites sous forme initialement gazeuse.

A cet effet, la Demanderesse a mis au point un procédé de mise en contact d'au moins deux composés gazeux réactifs à partir d'au moins deux flux gazeux primaires distincts, qui est caractérisé en ce que, avant la mise en contact desdits deux composés on divise chacun des deux flux primaires en des flux secondaires distincts, puis on met en contact les uns avec les autres lesdits flux secondaires distincts de manière à former des motifs répétitifs de mélanges élémentaires desdits deux composés.

Avantageusement, on impartit aux mélanges élémentaires un mouvement global d'entraînement à partir d'au moins un des flux servant à former les mélanges élémentaires.

Selon le concept de l'invention, on forme un ensemble homogène de mélanges élémentaires homogènes avant le début de la réaction qui est d'autant plus rapide qu'elle a lieu entre gaz. Les mélanges élémentaires homogènes doivent donc être réalisés dans un délai d'autant plus court que cette réaction est rapide.

Les gaz étant disponibles à une pression donnée, donc à une vitesse d'injection définie, les mélanges élémentaires sont d'autant plus rapides qu'ils sont réalisés à faible échelle.

La portée d'un jet à l'issue d'un orifice étant proportionnelle au diamètre dudit orifice et indépendante du débit, les motifs répétitifs générateurs des mélanges élémentaires seront donc avantageusement constitués d'orifices rapprochés de petites dimensions.

Pratiquement, de manière simple, on prédivise chaque flux de gaz en formant des motifs répétitifs d'injection tels que couples d'orifices voisins.

Ces motifs, qui sont répétitifs d'un point de vue géométrique, doivent l'être aussi d'un point de vue

2

hydrodynamique, en assurant l'équirépartition des débits. Cet effet est obtenu en imposant à la vitesse d'éjection Ve d'un gaz à travers les orifices qui lui sont attribués dans lesdits motifs répétitifs une valeur égale à au moins 3 fois de préférence 6 fois la valeur de la vitesse de distribution Vd en amont desdits orifices, dans le cas de l'air dans des conditions normales de température et de pression.

On obtient ainsi un ensemble homogène de mélanges élémentaires homogènes dans un état de mélange comparable à celui observé à l'issue de la zone d'effet retard décrite précédemment dans le cas des mélanges gaz-liquide.

On impartit avantageusement à l'un au moins de ces flux un mouvement tourbillon symétrique avec un débit suffisant pour provoquer un effet d'entraînement de l'autre flux gazeux (ou des autres flux gazeux).

Puis, on prévoit en aval un espace restreint, zone de confinement de manière à provoquer la rotation dudit flux autour de l'axe de l'écoulement ultérieur, en assurant la fonction d'entraînement global.

Cette manière d'opérer permet d'obtenir, à l'échelle de l'appareil, un mélange très rapide des mélanges élémentaires obtenus à l'échelle des motifs répétitifs d'injection, et un début de réaction sans omission ni répétition, d'où une densité de réactions très forte dans un volume total réduit au minimum.

Elle permet une miniaturisation de l'appareillage avec des effets de parois diminués, autorisant ainsi une protection thermique efficace par refroidissement desdites parois sans effet notable sur la température moyenne de la réaction. Il en résulte que l'on peut atteindre rapidement des températures très élevées dans les meilleures conditions de sécurité et obtenir des sélectivités particulières.

Cependant, dans le cas, par exemple, du traitement de composés gazeux renfermant des hydrocarbures, il arrive que l'on observe des dépôts de carbone sur les parois.

En effet, la combustion d'un hydrocarbure à l'état gazeux dans un comburant donné, conduit à des produits de réaction uniquement gazeux (en général $H_2$, $H_2O$, $CO$ et $CO_2$) si plusieurs conditions sont réunies:

1) le mélange initial entre comburant et combustible doit être rapide, homogène et conduire à une température de fin de mélange (avant ou pendant le début des réactions) telle que l'inflammation du mélange et l'entretien desdites réactions soient possibles (préchauffage nécessaire dans certaines conditions), et que les réactions de décomposition polyphasiques du type $CH_4 \rightarrow C + 2H_2$ soient immédiatement suivies de réactions ultérieures de combustion complémentaire ou de réduction, à des vitesses relatives nettement plus grandes (réactions du type $C + O_2 \rightarrow CO_2$, $H_2 + 1/2\,O_2 \rightarrow H_2O$, $C + CO_2 \leftrightarrows 2\,CO$, $C + H_2O \rightleftarrows CO + H_2$)

2) la quantité de comburant doit être suffisante pour permettre l'achèvement complet desdites réactions, sans donc laisser de trace du produit solide transitoirement formé (carbone de décomposition thermique en particulier).

Ces conditions sont nécessaires. Elles suffisent en phase gaz si le mélange est assez rapide et bien réalisé. Par contre, le volume dans lequel s'effectuent ces réactions est évidemment limité par des parois. Si le dispositif d'ensemble est prévu pour un fonctionnement très chaud, donc à grandes vitesses de réactions, le "parcours libre initial" des molécules (entre leur injection, à travers la zone de mélange, jusqu'à leur première rencontre avec une paroi) est volontairement court (effet recherché de confinement des jets et diminution des effets de parois). Si, au terme de ce parcours, il existe encore des molécules de carburant dans leur état initial (simplement en cours d'échauffement), elles peuvent se trouver temporairement faire partie du gaz de couche limite laminaire qui recouvre la paroi, lieu où les mélanges ne se produisent plus pratiquement que par diffusion, où la composante de la turbulence perpendiculaire à la paroi est quasi-nulle et où les gaz, et en particulier le carburant, se trouvent donc rapidement portés, essentiellement par conduction, à une température voisine de celle de ladite paroi, avec localement une très faible probabilité de rencontrer des molécules de comburant.

Dans ce cas, si la paroi est à une température qui dépasse celle de décomposition thermique de l'hydrocarbure, ce dernier, n'ayant ainsi que très peu de chance localement de rencontrer du comburant, va se décomposer en carbone et hydrogène par exemple, la partie solide (le carbone) de ces composés se trouvant alors soumise à une dynamique différente de celle des composés gazeux (accélérations, forces électrostatiques et finalement dépôt solide possible à la paroi).

Dans ce cas, selon la présente invention, on peut remédier de manière simple à cet inconvénient, en maintenant les parois qui délimitent la zone de mélange à une température suffisamment basse pour éviter pratiquement la décomposition locale des produits de la réaction tels que les hydrocarbures.

Le procédé qui fait partie de l'invention se caractérise donc par une mise en contact d'au moins deux composés sous forme gazeuse, selon lequel on injecte au moins deux flux gazeux distincts dans une zone de mélange où, en prédivisant chaque flux, on forme des motifs répétitifs de mélanges élémentaires à partir desdits flux prédivisés, l'un au moins des flux gazeux comprenant au moins un hydrocarbure et le mélange étant porté à une température provoquant la dissociation des hydrocarbures et leur éventuelle réaction avec d'autres composés dans un espace restreint, zone de confinement, limité par des parois latérales, la température desdites parois étant maintenue à une valeur suffisamment basse pour éviter la décomposition locale des produits en présence dans ce mélange.

On pense que la molécule d'hydrocarbure en cours de chauffage, qui n'a pas encore rencontré de comburant avant d'approcher la paroi, si elle se trouve momentanément prise dans la couche limite laminaire décrite ci-dessus, voit sa température, par les mêmes effets de conduction que cités précédemment, redevenir proche de celle de ladite paroi, maintenue inférieure à celle de la décomposition dudit hydrocarbure. En l'absence locale de comburant, la paroi froide "neutralise" donc la tendance à l'évolution vers des processus de décomposition (en particulier en C solide), évolution qui réapparaîtra ultérieurement quand la molécule

3

0 171 316

d'hydrocarbure quittera la couche limite froide protectrice pour se réinjecter dans le mélange chaud, l'émission de carbone se faisant alors en atmosphère chaude d'oxygène (combustion) ou de $CO_2$ et/ou $H_2O$ (réduction en CO et $H_2$). Ce dispositif cumule donc les avantages d'une paroi froide (y compris sa tenue en présence de gaz chauds) et d'une réaction à haute température.

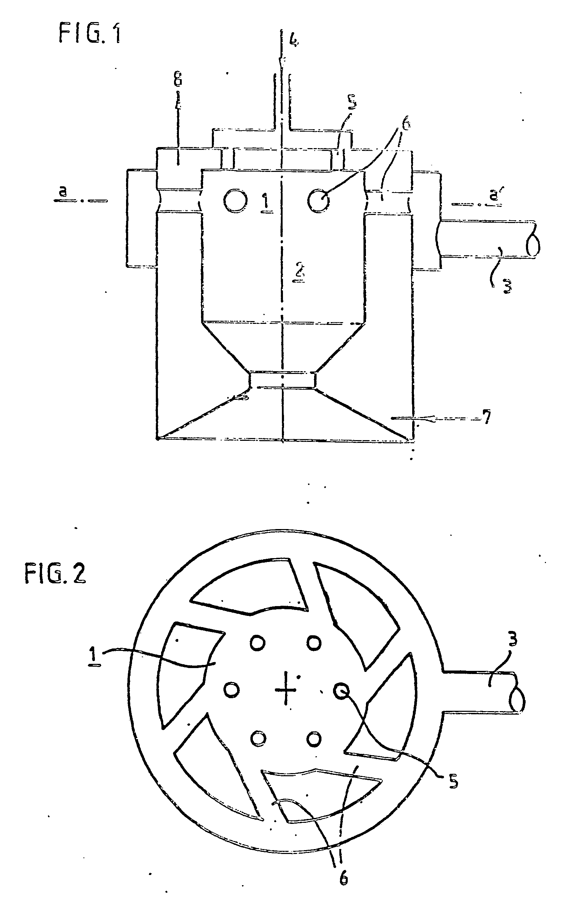

L'invention concerne également un dispositif qui comprend, selon la figure 1:

- une partie (1) dans laquelle sont ménagées au moins deux familles d'amenées de gaz issues de deux collecteurs d'alimentation (3) et (4)

- une chambre (2) dans laquelle débouchent les amenées de gaz,

ce dispositif étant caractérisé par le fait que les familles d'amenées de gaz sont disposées de manière telle qu'elles forment des couples répétitifs et voisins d'orifices d'injection.

Avantageusement, une au moins de ces amenées, est orientée de sorte à impartir une composante tangentielle à la vitesse d'injection d'au moins un des flux gazeux par rapport à l'axe principal d'écoulement ultérieur.

La figure 2 illustre une réalisation possible selon la coupe aa'.

L'ensemble des parois peut être, comme décrit ci-dessus et représenté à la figure (1), avantageusement refroidi par un fluide thermostatique, en particulier de l'eau. Les tubulures (7) et (8) schématisent l'entrée et la sortie dudit fluide à titre indicatif.

Selon une forme de réalisation de l'invention, le dispositif présente des moyens de régulation de la température des parois par un fluide thermostaté à une valeur suffisamment basse pour éviter la décomposition et/ou la réaction locale à la paroi des hydrocarbures dans le mélange.

De manière simple, ce fluide peut être constitué par le fluide entrant et sortant par lesdites tubulures (7) et (8).

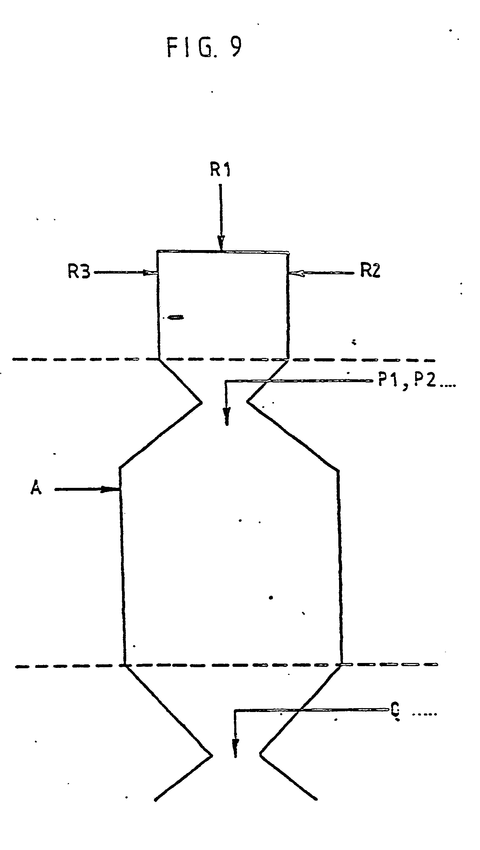

Les autres figures de 3 à 8 illustrent d'autres modes de réalisation et la figure 9 une vue schématique de diverses mises en oeuvre possibles.

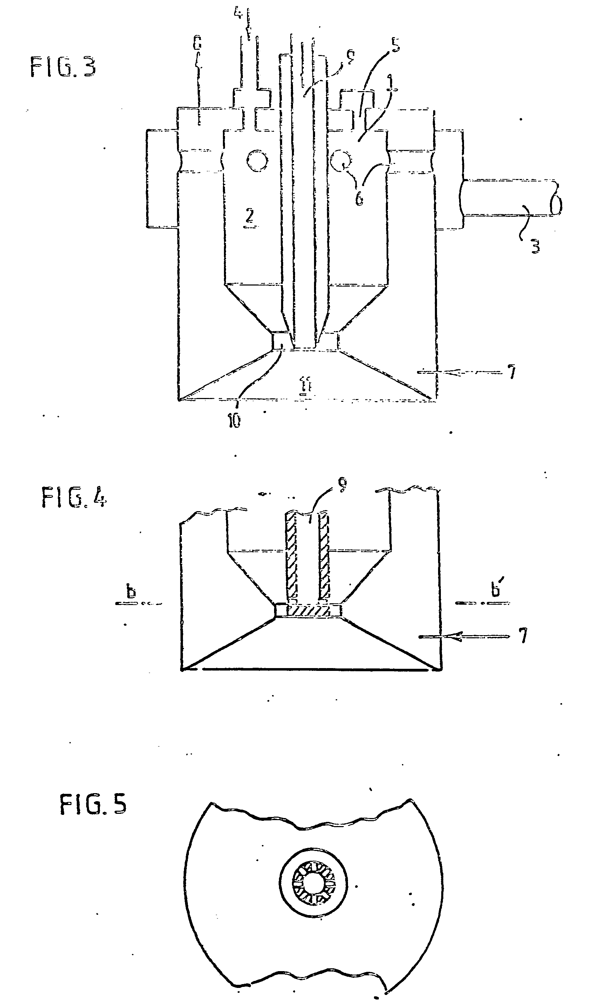

Selon la forme de réalisation illustrée à la figure 3, on amène un troisième fluide (phase axiale) à l'aide de la tubulure (9), avantageusement également refroidie, cette tubulure débouchant au voisinage du plan de passage restreint (10) de sortie de la chambre (2). Ce troisième fluide peut être gazeux ou liquide, éventuellement chargé et pulvérisable en (11) par transfert de l'énergie mécanique et thermique des gaz (3) + (4) ayant réagi en (1) et (2), ces gaz s'étant vu impartir une quantité de mouvement à leur entrée en (11) d'au moins 100 fois celle de la phase axiale (tubulure 9) et avantageusement entre 1000 et 10.000 fois la valeur de celle-ci quand ladite phase axiale est liquide ou sous forme de suspension pulvérisable, ces conditions provoquant la dispersion, puis la prise en charge et le traitement de la phase axiale par la phase gazeuse issue de (2), dans les conditions déjà décrites par la demanderesse dans les FR-A-2 257 326 et 2 508 818 notamment. On peut amener en (11) plusieurs fluides introduits coaxialement (9 représente alors plusieurs tubulures coaxiales).

Un traitement particulier mis en oeuvre ainsi en (11) est ce que la demanderesse a désigné par pulvérisation vaporisante, combinaison organisée dans l'écoulement, confiné en (11), et dit "puitstourbillon symétrique", des effets mécaniques et thermiques de la phase gaz sur la phase axiale généralement liquide.

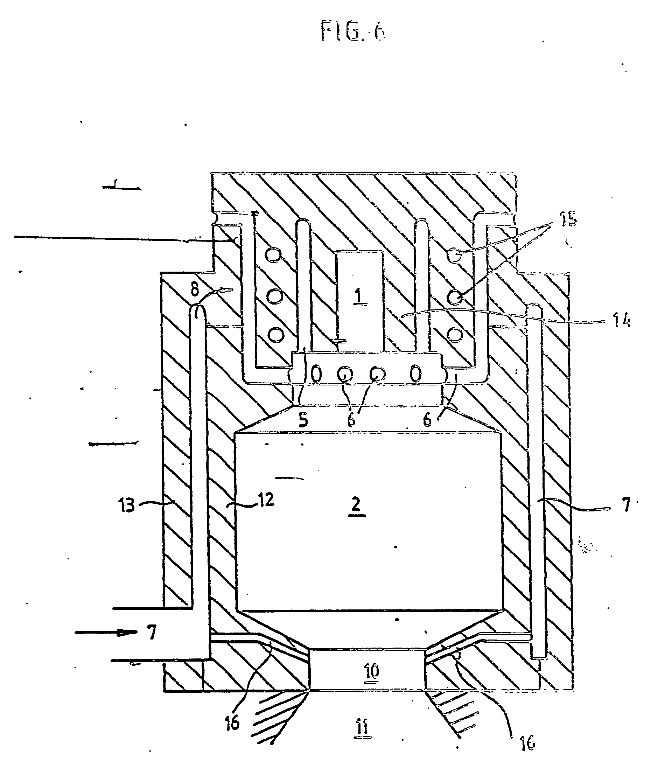

Dans le cas où cette phase axiale est gazeuse, un aménagement particulièrement avantageux de l'extrémité aval de la tubulure (9) est décrit par les figures 4 et 5 où l'on voit appliqués les principes de prédivision du jet de la phase axiale, ce qui réalise pratiquement des motifs répétitifs de mélanges élémentaires dans les veines associées des gaz moteurs issus de (2) selon l'écoulement particulier généré en (1), puis par la réaction qui a lieu en (2).

Dans le cas où toutes les phases sont injectées à l'état gazeux, on reste toutefois encore dans le cadre de l'invention, en n'impartissant pas de composante tangentielle aux mélanges élémentaires par rapport à l'axe de symétrie de l'écoulement ultérieur.

Ce dispositif peut être réalisé en toute matière telle que métaux, graphite, etc...

La figure 6 illustre une réalisation en graphite. L'enveloppe (13) du corps extérieur est en graphite imprégné pour étanchéité, son enveloppe interne (12) est en graphite poreux (non imprégné). Le caractère poreux lui assure la protection thermique due à la présence de liquide traversant le graphite par porosité.

La partie 1 du dispositif est prévue pour distribuer les phases gazeuses par les canaux (5) et (6) comme aux figures 1, 2 et 3 et comprend de surcroît l'aménagement du circuit (7), (8) de refroidissement sous forme de canaux (15) ménagés dans la partie (14) adaptée à la technologie particulière de la construction en graphite.

Ce dispositif peut être utilisé dans de nombreuses applications.

Une première application met en particulier en oeuvre comme réactifs gazeux l'hydrogène et le chlore, soit pour la synthèse d'acide chlorhydrique en travaillant à la stoechiométrie, à environ 5 % près, soit au contraire avec un excès de l'un ou l'autre réactif.

On sait que les problèmes liés à la synthèse de l'acide chlorhydrique sont particulièrement difficiles.

Or, grâce à la présente invention, il est possible de faire appel à des installations nettement moins importantes pour une même production

Le dispositif selon l'invention est alimenté par du chlore en (3) et de l'hydrogène en (4).

Les motifs répétitifs d'injection sont formés par les couples (5), (6). L'ensemble du dispositif est refroidi par le circuit (7), (8) alimenté en eau dans le cas d'une réalisation métallique (figures 1 à 3) et en solution d'acide chlorhydrique dans le cas d'une réalisation en graphite (figure 6).

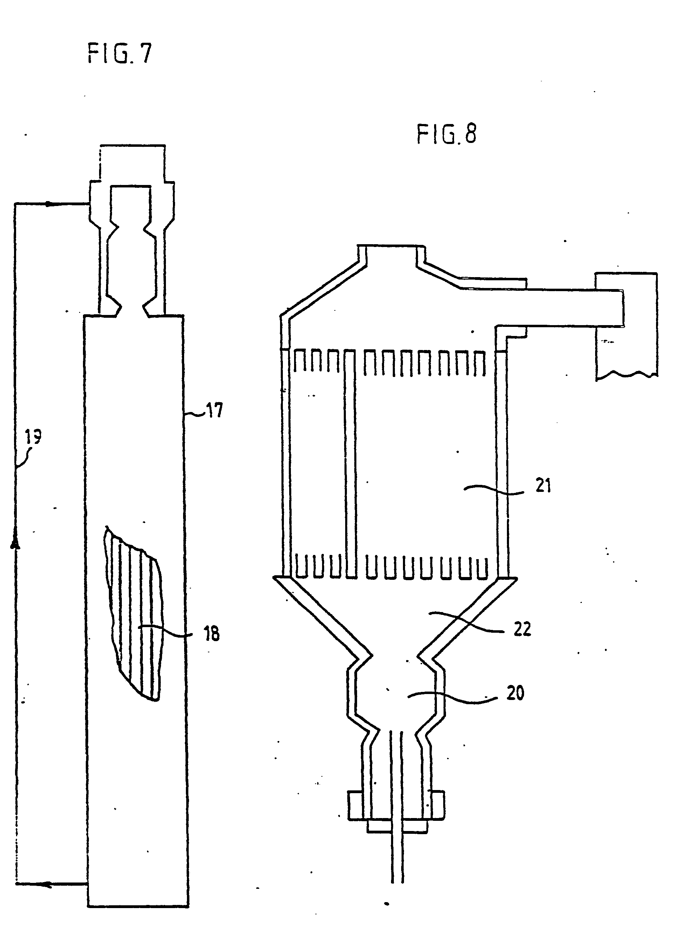

Ce dispositif est monté en amont d'une colonne (17) munie d'un échangeur (18) (figure 7).

4

**0 171 316**

La trempe est assurée directement par une solution d'acide chlorhydrique recyclée à partir du bas de la colonne (17) grâce à une boucle de recirculation (19).

La trempe des gaz de combustion est réalisée au niveau du passage restreint (10) soit à partir de canaux (16) dans le cas d'un dispositif en graphite (figure 6), soit à partir de la tubulure (9) dans le cas d'une réalisation métallique (figure 3).

L'échangeur (18) est construit notamment en graphite.

Selon une forme particulièrement avantageuse de la présente invention, on peut rendre assez élevée la concentration de l'acide en recirculation et abaisser corrélativement sa température, de telle sorte que ledit acide n'assure alors qu'un rôle de fluide thermique sans effet d'absorption.

Le gaz formé par combustion du chlore et de l'hydrogène est alors simplement lavé et refroidi en équilibre physico-chimique avec le liquide, puis délivré directement à l'utilisation.

On peut aussi mettre en oeuvre dans le même dispositif du chlore dilué par des gaz inertes tels que purge d'installation de liquéfaction de chlore, le débit d'hydrogène étant alors ajusté en conséquence.

On peut aussi utiliser le dispositif selon l'invention, selon un schéma tel qu'illustré à la figure 3, en l'alimentant en excès de chlore et en introduisant une phase liquide axiale, autre que l'acide chlorhydrique par la tubulure (9) à la hauteur du passage restreint (10).

Si la phase liquide axiale est un combustible tel qu'hydrocarboné, on en réalise ainsi (en 11) la chloration directe en solvants chlorés sans passage par l'étape intermédiaire classique de l'éthylène.

Dans le cas inverse où le fonctionnement du dispositif selon l'invention a lieu en excès d'hydrogène par rapport à la stoechiométrie $H_2 + Cl_2$, on peut réaliser (en 11) l'hydrogénation d'hydrocarbures lourds chlorés ou non.

Bien entendu, l'application du procédé et du dispositif selon l'invention n'est pas limitée au cas du chlore et de l'hydrogène.

On peut alimenter le dispositif par de l'air ou tout autre gaz comprenant en partie ou en totalité de l'oxygène en (3) et du gaz naturel en (4) et injecter en (9) des solvants chlorés, par exemple d'origine résiduaire, soumis alors en (11) à l'effet de pulvérisation vaporisante qui permet d'en assurer la combustion totale dans un dispositif tel que décrit par la figure 8 qui présente un montage illustrant particulièrement bien les qualités et avantages du procédé de l'invention.

Grâce à l'effet de miniaturisation du dispositif, le four qui suit normalement le brûleur est réduit à la dimension d'un simple foyer (20).

Ce foyer à très haute densité d'énergie peut être à parois métalliques thermostatées. Bien évidemment, ce dispositif comme les précédents peut ou non comporter un dispositif de trempe.

Sur le dispositif représenté par la figure 8, une chaudière (21) fait suite au foyer (20), raccordée par un volume conique divergent (22).

Cet énoncé des applications n'est évidemment pas limitatif.

On a résumé dans le tableau ci-après un certain nombre de possibilités de l'invention qui se rapportent aux figures déjà mentionnées et à la figure 9.

A la figure 9:

$R_1$, $R_2$ et $R_3$ représentent les alimentations en gaz et correspondent donc à (3) et (4) des autres figures et $P_1$, $P_2$, les alimentations en phase axiale.

Egalement sur la figure 9, A illustre une possibilité d'alimentation en une phase gazeuse et Q en une phase liquide, notamment de trempe.

Cette figure illustre donc une généralisation de l'application du concept de l'invention.

Le procédé et le dispositif de l'invention s'appliquent bien entendu à d'autres applications mettant en jeu le traitement d'une phase gazeuse ou liquide, éventuellement chargée et pulvérisable.

En particulier, ils peuvent être mis en oeuvre dans des cas d'anti-pollution.

A la figure 9, une alimentation en gaz ($R_1$, $R_2$, $R_3$) ou fluide éventuellement chargé, pulvérisable ($P_1$, $P_2$) peut être notamment constituée par une phase à dépolluer.

| | ALIMENTATION DU DISPOSITIF PAR | | | REACTIONS PHYSICO-CHIMIQUES | | OBSERVATIONS (Cf figure 9) |
|---|---|---|---|---|---|---|
| N° | (3) | (4) | (9) | en (2) | en (11) | |
| 1 | Air et/ou $O_2$ | $H_2$ | Néant et/ou vapeur et/ou $H_2O$ liquide | Combustion $H_2$ dans l'$O_2$ | Génération de vapeur d'eau sur-chauffée (ou gaz chauds) | $P_1$, $P_2$ éventuels par tubulure (9) |
| 2 | Idem | HC gazeux (ou $H_2$) | Néant | Combustion HC (ou $H_2$) dans l'$O_2$ | Génération de gaz chauds | " |
| 3 | Idem | Idem | Solution ou suspension | Idem | Concentration, séchage ou traite-ment thermique de la phase axiale ($P_1$, $P_2$) | " |
| 4 | Idem | Idem | HC liquide et/ou combustible solide fin dispersable en "transport fluidisé" (eau, HC liquide, $CO_2$ et/ou gaz...) | Idem | Combustion par "pulvaporisation" de la phase axiale Appoint de combu-rant en (11) éven-tuel | Eventuellement, trempe selon Q |

HC = hydroearbune.

| | ALIMENTATION DU DISPOSITIF PAR | | | REACTIONS PHYSICO-CHIMIQUES | | OBSERVATIONS (Cf figure 9) |
|---|---|---|---|---|---|---|
| N° | (3) | (4) | (9) | en (2) | en (11) | |
| 5 | Air et/ou $O_2$ | Idem | HC liquide | Combustion $H_2$ dans l'$O_2$ avec $H_2$ en excès | Hydrovapocraquage de (9) | Idem |
| 6 | Idem | Idem | $CH_4$ avantageusement | Idem | Production de $C_2H_2$ | (9) selon fig. 4 et 5. Q immédiatement en aval de (11) -(très bref temps de séjour en (11)-: |
| 7 | Idem | Idem | Liquide pollué par des polluants combustibles (par ex.: eau salée avec matières organiques | Combustion HC et/ou $H_2$ dans l'$O_2$ avec excès d'$O_2$ (et/ou air) | Combustion des résidus organiques: séparation des sels éventuels | Séparation des sels secs: (filtres) ou Q pour lavage des sels dépollués |
| 8 | Idem | Idem | Solvants résiduaires chlorés, bromés, fluorés ou non | Idem | Combustion avec production d'HCl, d'HBr ou de HF | $P_1$, $P_2$, etc... peuvent contenir de la dioxine ou des précurseurs (p.e.: chlorobenzènes), Q pour trempe évitant la présence d'halogènes libres: dans les effluents |

HC = hydrocarbune

TABLEAU (3ème partie)

0171316

| N° | ALIMENTATION DU DISPOSITIF PAR | | | REACTIONS PHYSICO-CHIMIQUES | | OBSERVATIONS (Cf figure 9) |
|---|---|---|---|---|---|---|
| | (3) | (4) | (9) | en (2) | en (11) | |
| 9 | $Cl_2$ tel que sortant d'une salle d'hydrolyse ou "inertes" de liquéfaction du $Cl_2$ | $H_2$ en léger excès | Eau, solution chlorhydrique diluée ou solution chlorhydrique dont la concentration est à équilibre en (11) avec les gaz à la température atteinte | $Cl_2 + H_2 \longrightarrow 2\ HCl$ + léger excès d'$H_2$ --> gaz HCl | Absorption d'HCl dans l'eau, dans la solution diluée et/ou refroidissement du gaz HCl obtenu | - |
| 10 | Idem | Idem | Solution aqueuse $P_2O_5$ | Idem | Concentration en $P_2O_5$ | S'adresse en particulier aux solutions de $P_2O_5$ obtenues par attaque chlorhydrique de phosphates |
| 11 | $Cl_2$ dilué par les inertes d'une liquéfaction | $H_2$ en excès par rapport au chlore et à l'$O_2$ des inertes | Solution chlorhydrique par refroidissement et absorption | Idem (+ inertes) | Refroidissement et absorption | - |

| N° | ALIMENTATION DU DISPOSITIF PAR | | | REACTIONS PHYSICO-CHIMIQUES | | OBSERVATIONS (Cf figure 9) |
|---|---|---|---|---|---|---|
| | (3) | (4) | (9) | en (2) | en (11) | |
| 12 | $Cl_2$ en excès | $H_2$ | HC liquide (ou gazeux) | $Cl_2 + H_2$ --> HCl + $Cl_2$ en excès | Vaporisation et chloration directe de l'HC en solvants chlorés (surtout CV) | Q = solvants chlorés lourds et/ou solution aqueuse chlorhydrique pour trempe des réactions de chloration en vue d'augmenter la sélectivité sur chlorure de vinyle monomère en particulier |
| 13 | $Cl_2$ | $H_2$ en excès | Solvants chlorés lourds résiduaires | Idem ($H_2$ en excès) | Hydrogénation à chaud en phase vapeur des solvants lourds | Q pour trempe avant séparation |
| 14 | Idem | Idem | Solvants chlorés à brûler dans air secondaire | Idem | Combustion complète | A = air ou oxygène Q = trempe de refroidissement et absorption. Le choix du chlore en (3) permet d'augmenter la pression partielle d'HCl en (11), donc de faciliter l'absorption dans le fluide Q. |

HC = hydrocarbune

**Revendications**

1. Procédé de mise en contact d'au moins deux composés gazeux réactifs à partir d'au moins deux flux gazeux primaires distincts, caractérisé en ce que, avant la mise en contact desdits deux composés on divise chacun des deux flux primaires en des flux secondaires distincts, puis on met en contact les uns avec les autres lesdits flux secondaires distincts de manière à former des motifs répétitifs de mélanges élémentaires desdits deux composés.

2. Procédé selon la revendication 1, caractérisé par le fait que l'on impartit auxdits mélanges élémentaires un mouvement global d'entraînement à partir d'au moins un des flux servant à former les mélanges élémentaires.

3. Procédé selon l'une des revendications 1 et 2, caractérisé par le fait que l'on impose à la vitesse d'injection Ve d'un gaz à travers les orifices qui lui sont attribués dans lesdits motifs répétitifs une valeur égale à au moins 3 fois la valeur de la vitesse de distribution Vd en amont desdits orifices, dans le cas où la phase gazeuse est constituée par de l'air dans les conditions normales de température et de pression.

4. Procédé selon l'une des revendications 2 et 3, caractérisé par le fait que le mouvement global d'entraînement est imparti au moyen d'un flux animé d'un mouvement tourbillon symétrique et que l'on ménage en aval un espace restreint, zone de confinement de manière à provoquer la rotation dudit flux autour de l'axe de l'écoulement ultérieur.

5. Procédé selon l'une des revendications 1 à 4, caractérisé par le fait que l'on maintient les parois qui délimitent l'espace restreint à une température suffisamment basse pour éviter la décomposition locale des produits de la réaction.

6. Procédé selon la revendication 5, caractérisé par le fait que le mélange renferme des hydrocarbures.

7. Dispositif pour mettre en oeuvre le procédé selon l'une des revendication 1 à 6 comprenant :
- une partie (1) dans laquelle sont ménagées au moins deux familles d'amenées de gaz issues de deux collecteurs d'alimentation (3) et (4)
- une chambre (2) dans laquelle débouchent les amenées de gaz
caractérisé par le fait que les familles d'amenées de gaz sont disposées de manière telle qu'elles forment des couples répétitifs et voisins d'orifices d'injection.

8. Dispositif selon la revendication 7, caractérisé par le fait qu'une au moins des familles d'amenées de gaz est orientée de sorte à impartir une composante tangentielle à la vitesse d'injection d'au moins un des flux gazeux par rapport à l'axe principal d'écoulement ultérieur.

9. Dispositif selon l'une des revendications 7 et 8, caractérisé par le fait qu'il présente des moyens de régulation de la température des parois par un fluide thermostaté.

10) Application du procédé et du dispositif selon l'une des revendications 1 à 9, au cas où un des gaz comprend de l'oxygène et où un autre gaz est du groupe de l'hydrogène et/ou des hydrocarbures.

11. Application du procédé et du dispositif selon l'une des revendications 1 à 9, au cas où un des gaz comprend du chlore et où un autre gaz comprend de l'hydrogène et/ou des hydrocarbures.

12. Application du procédé et du dispositif selon l'une des revendications 1 à 9 à l'anti-pollution.


**Patentansprüche**

1. Verfahren zum in Kontakt bringen von wenigstens zwei reaktiven gasförmigen Verbindungen, ausgehend von wenigstens zwei getrennten primären gasförmigen Strömen, dadurch gekennzeichnet, daß man, vor dem in Kontakt bringen der zwei Verbindungen, einen jeden der zwei primären Ströme in getrennte sekundäre Ströme aufteilt und dann diese getrennten sekundären Ströme miteinander auf eine Weise in Kontakt bringt, dass sich wiederholende Einheiten elementarer Mischungen der zwei Verbindungen bilden.

2. Verfahren nach Anspruch 1, dadurch gekennzeichnet, daß man den elementaren Mischungen eine umfassende Mitnahmebewegung ausgehend von wenigstens einem der Ströme, verleiht, welcher dazu dient, die elementaren Mischungen zu bilden.

3. Verfahren nach einem der Ansprüche 1 und 2, dadurch gekennzeichnet, daß man der Injektionsgeschwindigkeit Ve eines Gases ihm zugeordneten Öffnungen in den sich periodisch wiederholenden einheiten einen Wert gibt, der, in dem Fall, in dem die Gasphase aus Luft unter normalen Temperatur- und Druckbedingungen gebildet wird, wenigstens das 3-fache des Werts der Verteilungsgeschwindigkeit Vd oberhalb der Öffnungen ist.

4. Verfahren nach einem der Ansprüche 2 und 3, dadurch gekennzeichnet, daß die umfassende Mitnahmebewegung dem Medium von einem durch symmetrische Wirbelbewegung bewegten Strom verliehen wird und daß man stromabwärts einen begrenzten Raum, eine Einschlußzone derart anordnet, daß eine Rotation des Stroms um seine spätere Abflußachse bewirkt wird.

5.Verfahren nach einem der Ansprüche 1 bis 4, dadurch gekennzeichnet, daß man die Wandungen, die den begrenzten Raum eingrenzen, auf einer zur Verhinderung der örtlichen Zersetzung der Reaktionsprodukte hinreichend niedrigen Temperatur hält.

6. Verfahren nach Anspruch 5, dadurch gekennzeichnet, daß die Mischung Kohlenwasserstoffe einschließt.

7. Vorrichtung zur Durchführung des Verfahrens nach einem der Ansprüche 1 bis 6, welche umfaßt:
- ein Teil (1), in welchem wenigstens zwei von Versorgungsleitungen (3) und (4) ausgehende Gruppen von Gaszuführungen angeordnet sind,

- eine Kammer (2), in welche die Gaszuführungen münden,

dadurch gekennzeichnet, daß die Gruppen von Gaszuführungen auf eine Weise angeordnet sind, daß sie sich periodisch wiederholende und zu den Einspritzdüsen benachbarte Paare bilden.

8. Vorrichtung nach Anspruch 7, dadurch gekennzeichnet, daß wenigstens eine der Gruppen von Gaszuführungen derart orientiert ist, daß sie wenigstens einem der Gasströme eine zur Einspritzgeschwindigkeit tangentiale Komponente, bezogen auf die Hauptachse des späteren Abflusses, verleiht.

9. Vorrichtung nach einem der Ansprüche 7 und 8, dadurch gekennzeichnet, daß sie Mittel zur Temperaturregulierung der Wände durch eine thermostatisierte Flüssigkeit aufweist.

10. Anwendung des Verfahrens und der Vorrichtung nach einem der Ansprüche 1 bis 9 auf den Fall, in dem eines der Gase Sauerstoff umfaßt und ein anderes Gas aus der aus Wasserstoff und/oder den Kohlenwasserstoffen bestehenden Gruppe ist.

11. Anwendung des Verfahrens oder der Vorrichtung nach einem der Ansprüche 1 bis 9 auf den Fall, in dem eines der Gase Chlor umfaßt und ein anderes Gas Wasserstoff und/oder Kohlenwasserstoffe.

12. Anwendung des Verfahrens und der Vorrichtung nach einem der Ansprüche 1 bis 9 zur Schadstoffverminderung.

## Claims

1. A process for contacting at least two reactive gaseous compounds from at least two separate primary gaseous flows characterised in that prior to the step of contacting said two compounds, each of the two primary flows is divided into separate secondary flows, then said separate secondary flows are brought into contact with each other so as to form repetitive units of elementary mixtures of said two compounds.

2. A process according to claim 1 characterised by imparting to said elementary mixtures an overall movement of entrainment from at least one of the flows serving to form the elementary mixtures.

3. A process according to one of claims 1 and 2 characterised by imposing on the speed of injection Ve of a gas through the orifices which are allotted thereto in said repetitive units a value which is equal to at least three times the value of the speed of distribution Vd upstream of said orifices, when the gaseous phase comprises air under normal temperature and pressure conditions.

4. A process according to one of claims 2 and 3 characterised in that the overall entrainment movement is imparted by means of a flow which is displaced with a symmetrical vortex movement and that disposed downstream is a restricted space, a confinement zone, such as to cause rotation of said flow about the axis of the subsequent flow configuration.

5. A process according to one of claims 1 to 4 characterised in that the walls defining the restricted space are maintained at a sufficiently low temperature to avoid local decomposition of the products of the reaction.

6. A process according to claim 5 characterised in that the mixture contains hydrocarbons.

7. Apparatus for carrying out the process according to one of claims 1 to 6 comprising:

- a portion (1) in which there are provided at least two families of gas feeds issuing from two supply manifolds (3) and (4), and

- a chamber (2) into which the gas feeds open,

characterised in that the families of gas feeds are disposed in such a way that they form repetitive and adjacent pairs of injection orifices.

8. Apparatus according to claim 7 characterised in that at least one of the families of gas feeds is so oriented as to impart a tangential component to the speed of injection of at least one of the gas flows with respect to the main axis of the subsequent flow configuration.

9. Apparatus according to one of claims 7 and 8 characterised in that it has means for regulating the temperature of the walls by means of a thermostatically controlled fluid.

10. Use of the process and the apparatus according to one of claims 1 to 9 when one of the gases comprises oxygen and another gas is from the group comprising hydrogen and/or hydrocarbons.

11. Use of the process and the apparatus according to one of claims 1 to 9 when one of the gases comprises chlorine and another gas comprises hydrogen and/or hydrocarbons.

12. Use of the process and the apparatus according to one of claims 1 to 9 for anti-pollution purposes.

FIG.1

FIG.2

FIG. 3

FIG. 4

FIG. 5

FIG. 6

FIG. 7

FIG. 8

# FIG. 9